(19) **Europäisches Patentamt**
**European Patent Office**
**Office européen des brevets**

(11) **EP 3 993 413 A1**

(12) **EUROPEAN PATENT APPLICATION**
published in accordance with Art. 153(4) EPC

(43) Date of publication:
**04.05.2022 Bulletin 2022/18**

(21) Application number: **20907233.9**

(22) Date of filing: **24.09.2020**

(51) International Patent Classification (IPC):
*H04N 19/115* (2014.01)      *H04N 19/124* (2014.01)
*H04N 19/139* (2014.01)      *H04N 19/146* (2014.01)
*H04N 19/159* (2014.01)      *H04N 19/172* (2014.01)
*H04N 19/196* (2014.01)      *H04N 19/91* (2014.01)

(52) Cooperative Patent Classification (CPC):
**H04N 19/40; H04N 19/115; H04N 19/124;**
**H04N 19/136; H04N 19/146; H04N 19/172**

(86) International application number:
**PCT/CN2020/117370**

(87) International publication number:
**WO 2021/129007 (01.07.2021 Gazette 2021/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.12.2019 CN 201911366575**

(71) Applicant: **TENCENT TECHNOLOGY (SHENZHEN)**
**COMPANY LIMITED**
**Shenzhen, GUANGDONG 518057, (CN)**

(72) Inventor: **HAN, Haixu**
**Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **METHOD AND DEVICE FOR DETERMINING VIDEO BITRATE, COMPUTER APPARATUS, AND STORAGE MEDIUM**

(57) The present invention relates to the technical field of video transcoding. Provided in embodiments of the present invention are a method and device for determining a video bitrate, a computer apparatus, and a storage medium. The method comprises: selecting, at intervals, target video frames from respective video frames of a video to be transcoded; determining a predicted video bitrate of the video according to bitrate feature information of the target video frames; acquiring a first relative relation between the predicted video bitrate and an actual video bitrate of the video; and determining a target video bitrate of the video according to the first relative relation and bitrate requirement information of a target service platform, wherein the target service platform is a service platform on which the transcoded video will be processed.

Figure 2

**EP 3 993 413 A1**

**Description**

RELATED APPLICATION

This application claims priority to Chinese Patent Application No. 201911366575.4, entitled "METHOD AND APPARATUS FOR DETERMINING VIDEO BITRATE, COMPUTER DEVICE, AND STORAGE MEDIUM" filed on December 26, 2019 with the China National Intellectual Property Administration, which is incorporated by reference in its entirety.

FIELD OF THE TECHNOLOGY

The present disclosure relates to the technical field of video transcoding, and in particular to a method and an apparatus for determining a video bitrate, a computer device, and a storage medium.

BACKGROUND OF THE DISCLOSURE

Techniques concerning video encoding and video decoding emerge with development of network video technology. Through encoding and decoding, a video can be played and transmitted among different devices. In order to adapt a video to a specific playing scenario, it is required to determine a bitrate for the video, such that the video can be processed, e.g. transcoded, accordingly. In a conventional method for determining a video bitrate, parameters of a video is obtained according to a current video data stream, and the video bitrate is determined based on a modelled relationship concerning a quality factor, such as a PSNR. Alternatively, different scenarios, or different degrees of complexity in the scenarios, are distinguished based on machine learning through a scenario-analyzing method, and the video bitrate is determined accordingly.

The conventional methods are deficient in at least following aspects. It is necessary to decode the inputted video stream completely, such that model estimation, scene texture recognition, and other processing can be performed on frame-level images. Consequently, it is complex and inefficient to determine the video bitrate.

The information disclosed above is only intended to help understand a background of embodiments of the present disclosure, and may include information that does not constitute a prior art which is known to persons having ordinary skill in the art.

SUMMARY

A method and an apparatus for determining a video bitrate, a computer device, and a storage medium are provided according to embodiments provided in the present disclosure.

In an embodiment, a method for determining a video bitrate is provided. The method is performed by a computer device, and includes: selecting, in a time-shifted manner, target video frames from video frames of a to-be-transcoded video; determining an estimated video bitrate of the to-be-transcoded video according to bitrate feature information of the target video frames; obtaining a first relative relationship between the estimated video bitrate and an actual video bitrate of the to-be-transcoded video; and determining a target video bitrate of the to-be-transcoded video according to the first relative relationship and bitrate requirement information of a target service platform.

In an embodiment, an apparatus for determining a video bitrate is provided. The apparatus includes: a video-frame selection module, configured to select target video frames from video frames of a to-be-transcoded video in a time-shifted manner; an estimated-bitrate determination module, configured to determine an estimated video bitrate of the to-be-transcoded video according to bitrate feature information of the target video frames; a relationship determination module, configured to obtain a first relative relationship between the estimated video bitrate and an actual video bitrate of the to-be-transcoded video; and a target-bitrate determination module, configured to determine a target video bitrate of the to-be-transcoded video according to the first relative relationship and bitrate requirement information of a target service platform.

In an embodiment, a computer device is provided, including a memory and a processor. The memory stores computer-readable instructions, and the processor when executing the computer-readable instructions implements following operations: selecting target video frames from video frames of a to-be-transcoded video in a time-shifted manner; determining an estimated video bitrate of the to-be-transcoded video according to bitrate feature information of the target video frames; obtaining a first relative relationship between the estimated video bitrate and an actual video bitrate of the to-be-transcoded video; and determining a target video bitrate of the to-be-transcoded video according to the first relative relationship and bitrate requirement information of a target service platform.

In an embodiment, a non-volatile storage medium is provided, storing one or more computer-readable instructions. The computer-readable instructions when executed by a processor implement following operations: selecting target video frames from video frames of a to-be-transcoded video in a time-shifted manner; determining an estimated video bitrate of the to-be-transcoded video according to bitrate feature information of the target video frames; obtaining a first relative relationship between the estimated video bitrate and an actual video bitrate of the to-be-transcoded video; and determining a target video bitrate of the to-be-transcoded video according to the first relative relationship and bitrate requirement information of a target service platform.

Details of one or more embodiments of the present disclosure are provided in following drawings and descriptions. Other features, objectives, and advantages of the present disclosure would be apparent according to the specification, the drawings, and the claims.

## BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is a diagram of an application environment of a method for determining a video bitrate according to an embodiment.

Figure 2 is a schematic flowchart of a method for determining a video bitrate according to an embodiment.

Figure 3 is a diagram of an interface displaying transcoding prompt information according to an embodiment.

Figure 4 is a schematic flowchart of a method for determining a video bitrate according to another embodiment.

Figure 5 is a schematic flowchart of a method for determining a video bitrate according to another embodiment.

Figure 6 is a diagram of an application scenario of a method for determining a video bitrate according to an embodiment

Figure 7 is a structural block diagram of an apparatus for determining a video bitrate according to an embodiment.

## DESCRIPTION OF EMBODIMENTS

Hereinafter embodiments of the present disclosure are described in detail in conjunction with the drawings to facilitate understanding objectives, technical solutions, and advantages of the present disclosure. The specific embodiments described herein are merely intended for explaining the present disclosure, not for limiting the present disclosure.

Herein the term "embodiment" indicates that a particular feature, structure, or characteristic that is described in conjunction with such embodiment may be included in at least one embodiment of the present disclosure. Such terms at different positions of the specification may not refer to the same embodiment, and may not refer to independent embodiments or alternative embodiments which are mutually exclusive. Those skilled in the art can appreciate, explicitly or implicitly, that one embodiment described herein may be combined with another.

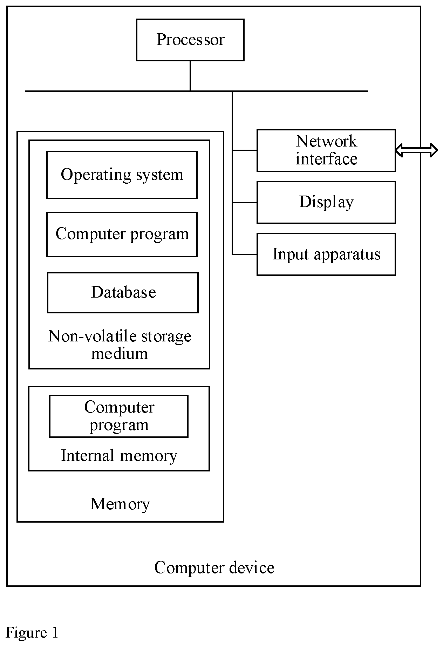

A method for determining a video bitrate according to the present disclosure may be applied to a computer device shown in Figure 1. The computer device may be a server, or may be a terminal device. An internal structure of the computer device may be as shown in Figure 1. The computer device includes a processor, a memory, a network interface, a display screen, an input apparatus, and the like, which are connected via a system bus. The processor is configured to provide a capability of computing and control. The memory includes a non-volatile storage medium and an internal memory. The non-volatile storage medium stores an operating system, computer-readable instructions, and a database. The computer-readable instructions when executed by the processor implements a method for determining a video bitrate. The internal memory provides an environment for running the operating system and the computer-readable instructions in the non-volatile storage medium. The database is configured to store data concerning a process of performing the method for determining the video bitrate. For example, the database may store data bitrate feature information and an estimated video bitrate. The network interface is configured to communicate with an external terminal via a network connection. For example, the network interface is connected to a client, and configured to transmit a transcoded video to the client. The display may be a liquid crystal display or an e-ink display. The input apparatus may be a touch-control layer covering the display, may be a button, a trackball, or a touchpad disposed on a housing of the computer device, or may be a keyboard, touchpad, mouse, or the like, which is externally connected. In an embodiment, the terminal device may be, but is not limited to, various personal computers (PCs), notebook computers, smartphones, tablet computers, and portable wearable devices. The server may be implemented as an independent server or a server cluster including multiple servers.

Those skilled in the art may understand that the structure as shown in Figure 1 is only a block diagram of a part of a structure related to a solution of the present disclosure, and is not intended to put a limitation on the computer device to which the solution of the present disclosure is applied. A specific computer device may include more or fewer components than those as shown in Figure 1, some components as shown in Figure 1 may be combined, or a different deployment of the components may be utilized.

A method and an apparatus for determining a video bitrate, a computer device, and a storage medium are provided according to embodiments of the present disclosure.

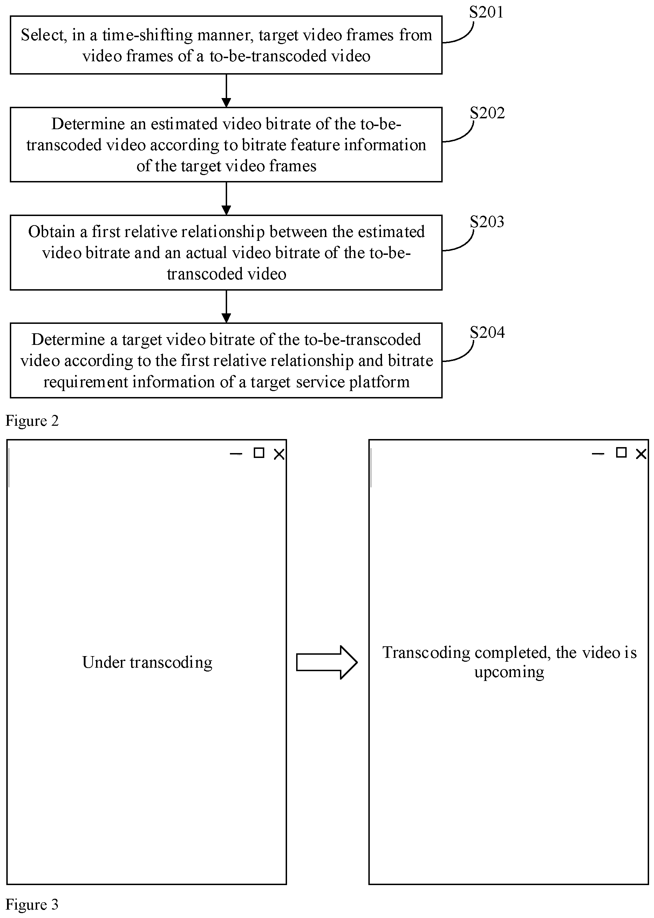

In an embodiment, a method for determining a video bitrate is provided, as shown in Figure 2. Hereinafter it is taken as an example for detailed illustration that the method is applied to the computer device as shown in Figure 1. The method includes following steps S201 to S204

In step S201, target video frames are selected from video frames of a to-be-transcoded video in a time-shifted manner.

In this embodiment, a video may refer to various video files that can be played and watched via the computer device. A bitrate refers to an amount of data that is transmitted per unit time during video data transmission. In some cases, it may be necessary to process, e.g. transcode, a video, such that the video file can be shared, exchanged, or played among different devices. The video transcoding refers to converting a compressed and encoded video data stream into another video data stream according to a certain coding standard, a certain bitrate, or other conditions. That is, the video transcoding is a process of decoding and then encoding a video file. The to-be-transcoded video may refer to a video on which transcoding needs to be performed. During the transcoding, the to-be-transcoded video is converted from an initial video bitrate to a target video bitrate. A type of the to-be-transcoded video may be HEVC, H.264/AVC, MPEGx, or the like. In addition, the to-be-transcoded video may be uploaded by a client, or may be transmitted from a video server that manages videos. When transmitting the to-be-transcoded video, the client or the video server may inform the computer device of a bitrate (i.e. an actual video bitrate) of the to-be-transcoded video.

In an embodiment, the to-be-transcoded video generally includes multiple video frames. In this step, one or more target video frames are selected from the video frames of the to-be-transcoded video in a time-shifted manner and through a specific manner.

Selecting in a time-shifted manner may refer to selecting the at least one target video frame from the video frames of the to-be-transcoded video according to a period of $N$ frames. In practice, a value of $N$ may be adjusted according to a capability and a requirement concerning a degree of complexity of a machine. $N$ may have a large value in a case that adaptive configuration on the bitrate is required to have a low latency and low complexity. Otherwise, $N$ may have a small value (in some embodiments, $N$ may be equal to 1). During the selection, $N$ may be fixed, or may be dynamically changed. In case of being dynamical changed, the period may vary randomly, or may change based on a certain rule. For example, $N$ may have a small value for a climax part (which is generally a middle part) of the video. A 50-minute video is taken as an example, where $N$ may be equal to 20 for the first 10 minutes, equal to 5 for the middle 30 minutes, and equal to 15 for the last 10 minutes. In an embodiment, values of $N$ corresponding to different to-be-transcoded videos may be identical, or may be different.

In an embodiment, the selected video frames serve as the target video frames. A quantity of the target video frames may be not fixed. In order to ensure computing efficiency, the quantity of the target video frames may be less than a total quantity of the video frames of the to-be-transcoded video. In an embodiment, target video frames of a certain quantity may be selected from the video randomly, or selected from the video through a specific selection manner.

Selecting from the to-be-transcoded video in the time-shifted manner improves a speed of selecting the video frames. Since it is not necessary to process every video frame in the to-be-transcoded video, the video bitrate is determined with an improved efficiency.

A process of selecting the target video frame from the to-be-transcoded video may be called frame-level skipping decision, of which a specific implementation may be as follows.

It is assumed that one frame is selected every $N$ frames. The frame-level skipping decision is performed on an $i^{th}$ frame: in a case that $i$ is an integer multiple of $N$, the $i^{th}$ frame serves as the target video frame for subsequent processing; otherwise, the frame is directly skipped and the frame-level skipping decision is performed on the next frame. An equation representing the frame-level skipping decision may be:

$$skip_i = \begin{cases} 1 & i\%N = 0 \\ 0 & i\%N \neq 0 \end{cases},$$

where "%" is a reminder operator, $i$ represents a sequential number of a current frame. $skip_i$=1 represents that the current frame is selected (that is, serves as the target video frame), and $skip_i$=0 represents that the current frame is not selected.

In an embodiment, the target video frame may be decoded, for example, entropy decoded. After the entropy decoding, feature information related to video transcoding may be extracted from the video frame to facilitate subsequent transcoding.

A video bitrate may be determined once a target video frame is selected. In a case that the video bitrate obtained according to the target video frame which is currently selected meets a requirement, the process of selecting the target video frames may be terminated. Otherwise, in a case that the obtained video bitrate does not meet the requirement, the process of selecting the target video frames may continue, and the video bitrate is re-calculated according to another target video frame that is newly selected. In another embodiment, all (or a part) of the video frames of the to-be-transcoded video may be traversed to select every target video frame therein, and then the video bitrate is determined accordingly.

In step S202, an estimated video bitrate of the to-be-transcoded video is determined according to bitrate feature information of the target video frames.

The bitrate feature information is feature information of the to-be-transcoded video applied to the encoding and decoding processes, and may represent a degree of complexity of a texture in the to-be-transcoded video. The bitrate feature information may include a resolution of the video, an intra-frame prediction ratio *Intra,* a motion vector residual *Mvd,* a quantization factor *QP,* or the like. The intra-frame prediction proportion may be a proportion of coding blocks, which adopts an intra-frame prediction mode (in which a current coding block is predicted based on a coded pixel in a current video frame to remove spatial redundancy effectively), among all coding blocks of a corresponding video frame. In the inter-frame prediction mode, the motion vector residual may be a difference between an actual motion vector and a predicted motion vector, and represent a relationship between the current coding block and an adjacent frame-prediction block. The quantization factor (also known as a quantization parameter) may be a sequential number of a quantization step, which can control amplitude of a bitrate outputted after video compression. A larger *QP* leads to a smaller bitrate. In an embodiment, the bitrate feature information may refer to the *QP.*

The estimated video bitrate is obtained based on the bitrate feature information of the target video frames, through a manner of calculation. Specifically, the estimated video bitrate is determined according to a part of video frames extracted from the to-be-transcoded video, i.e. the target video frames, which can reflect the bitrate of the to-be-transcoded video to some extent.

In step S203, a first relative relationship between the estimated video bitrate and an actual video bitrate of the to-be-transcoded video is obtained.

The actual video bitrate is an actual bitrate of the to-be-transcoded video. The client or the video server may notify the computer device of the actual video bitrate, when transmitting the to-be-transcoded video to the computer device. In a case that the client or the video server does not provide information on the bitrate of the to-be-transcoded video, the computer device may perform bitrate analysis on the to-be-transcoded video when obtaining the to-be-transcoded video, and an initial video bitrate obtained through the bitrate analysis serves as the actual video bitrate of the to-be-transcoded video.

A relative relationship may be relative magnitude of the estimated video bitrate and the actual video bitrate, a difference between the estimated video bitrate and the actual video bitrate, or the like. In an embodiment, the difference between the two bitrates may be compared with a pre-determined range for evaluating the relationship (where the pre-determined range may be fixed, or may be dynamic and calculated based on the estimated video bitrate). Alternatively, the two bitrates may be directly compared (or may be compared after weighted). Different processing may be performed for different comparison results. In a case that the difference is within a controllable range (for example, an absolute value of the difference is within the range for evaluating the relationship), the to-be-transcoded video may be directly transcoded according to a certain mode of video compression, such that the transcoded video meets a requirement. In some cases, the to-be-transcoded video has excessively high or excessively low quality (which may refer to a degree of complexity of a texture of the video), for example, the absolute value of the difference exceeds the range for evaluating the relationship. In such cases, the difference is within an uncontrollable range, and transcoding according to a conventional mode of video compression would result in an excessively large time consumption or excessively low quality of the transcoded video. Therefore, it is necessary to evaluate the to-be-transcoded video according to the relative relationship between the estimated video bitrate and the actual video bitrate, and then perform pertinent transcoding on the to-be-transcoded video.

Hence, the first relative relationship between the estimated video bitrate and the actual video bitrate of the to-be-transcoded video is determined in this step, and a video bitrate is determined according to the first relative relationship in a subsequent step.

In step S204, a target video bitrate of the to-be-transcoded video is determined according to the first relative relationship and bitrate requirement information of a target service platform. The target service platform may be a service platform to which the video is applied after being transcoded.

The target service platform may refer to various types of platforms capable to provide a service, such as playing, propagating, and processing the transcoded video. The target service platform may be an application program such as WeChat™ or a video player. The bitrate requirement information may refer to a requirement of the service on a bitrate when the target service platform processes on the video, and may be determined according to configuration, an attribute, a service requirement, or the like, of the target service platform. Taking the configuration as an example, the bitrate requirement information may be determined according to an internal memory for operation. For example, a large internal memory may indicate the bitrate requirement information of "requiring a large video bitrate". Taking the attribute as an example, the bitrate requirement information may be determined according to a type of the target service platform, an attribute of a terminal on which the target service platform is located, or the like. For example, the bitrate requirement information corresponding to a PC terminal may be "requiring a large video bitrate", while that corresponding to a mobile terminal may be "requiring a small video bitrate". Alternatively, the bitrate requirement information may be determined according to an upper limit and a lower limit of a bandwidth of a network environment. Taking the service requirement as an example, the bitrate requirement information may be determined according to a specific form of the service. For example, bitrate requirement information corresponding to playing video online in a video player may be "requiring a large video bitrate", while that corresponding to playing video in Moments of the WeChat™ platform may be "requiring a small video bitrate". The target video bitrate obtained according to the bitrate requirement information considers the requirement of the target service platform on the bitrate, and thereby can ensure excellent transmission and operation of the target service platform.

The method for determining the video bitrate is provided according to the above embodiment. The computer device selects the target video frames of a certain quantity from the to-be-transcoded video, which can reduce an amount of computation when determining the bitrate. The computer device determines the estimated video bitrate of the to-be-transcoded video according to the bitrate feature information of the target video frames, obtains the relative relationship between the estimated video bitrate and the actual video bitrate of the to-be-transcoded video, and obtains the target video bitrate of the to-be-transcoded video according to the relationship and the bitrate requirement information of the target service platform. Therefore, the video bitrate of the to-be-transcoded video can be rapidly determined according to a degree of complexity of the video.

In an embodiment, the bitrate feature information includes a quantization factor. The quantization factor is configured to represent a degree of quantization for a corresponding target video frame. The step S202 includes following steps. A quantity of the selected target video frames is determined. A mean quantization factor is determined according to the quantization factors and the quantity of the selected target video frames. The estimated video bitrate is obtained according to the mean quantization factor.

During video transcoding, information of a video frame subject to video conversion needs to be quantized. Quantization is a process of reducing a quantity of bits in each coefficient, that is, each coefficient is described under a coarser unit for bitrate measurement. The unit for bitrate measurement may represent the degree of quantization, where a larger unit indicates a higher degree and a smaller unit indicates a lower degree. Hereinafter two quantization modes having different degrees of quantization are illustrated as examples. A first quantization mode uses a value of 1 to represent an original value ranging from 1 to 5, and uses a value of 2 to represent the original value ranging from 6 to 10 (where the unit of measurement is 5). A second quantization mode uses a value of 1 to represent an original value ranging from 1 to 10, and uses a value of 2 to represent the original value ranging from 11 to 20 (where the unit of measurement is 10). The second mode has a higher degree of quantization than the first mode, and the degree can be represented by the quantization factor.

In an embodiment, the quantization factor of each target video frame may be represented by $QP_i$. Assuming that there are $M$ target video frames, the mean quantization factor $QP_{mean}$ may be calculated based on a following equation:

$$QP_{mean} = (\sum_{i \in M} QP_i) / M$$
.

In this embodiment, the computer device determines the estimated video bitrate according to the quantization factor. As the quantization factor serves as a good representation of information concerning the bitrate of the video, the estimated video bitrate can be determined rapidly and accurately in a simple manner.

In an embodiment, obtaining the estimated video bitrate according to the mean quantization factor includes following steps. A pre-determined constant is raised to a power of the mean quantization factor to obtain a value of an intermediate bitrate. The intermediate bitrate is multiplied by a first adjustment parameter to obtain the estimated video bitrate, where the first adjustment parameter is determined according to a resolution of the to-be-transcoded video.

The first adjustment parameter $k_1$ may be empirically determined according to the resolution. Generally, a larger resolution indicates a larger $k_1$. Optionally, $k_1$ may be equal to 5000 for a resolution of 1920x1080.

Optionally, the estimated video bitrate $Bitrate_{judge}$ may be calculated based on the following equation:

$$Bitrate_{judge} = k_1 \times 0.5^{QP_{mean}}$$

In an embodiment, the computer device may further adjust the estimated video bitrate according to another parameter. For example, the exponent is adjusted by a parameter $\delta$ to improve accuracy of the estimated video bitrate. $\delta$ may be an empirical constant, for example, $\delta = 6.0$.

In an embodiment, the computer device may calculate the estimated video bitrate $Bitrate_{judge}$ based on a following equation:

$$Bitrate_{judge} = k_1 \times 0.5^{(QP_{mean}/5-\delta)}$$

In this embodiment, the computer device determines the estimated video bitrate according to the quantization factor. The calculated mean quantization factor can represent information concerning the bitrate of the to-be-transcoded video, and thereby the obtained estimated video bitrate may reflect the bitrate of the to-be-transcoded video.

In an embodiment, before the step S202, the method further includes a following step. The target video frames are entropy-decoded. The quantization factors are determined according to the entropy-decoded target video frames.

The quantization factors may be stored in a code stream of the to-be-transcoded video. When the video bitrate of the to-be-transcoded video needs to be determined, the corresponding quantization factor may be obtained from the code stream.

In this embodiment, the computer device performs entropy decoding on the target video frames, and determines the quantization factors according to the entropy-decoded target video frames. Thereby, the quantization factors of the target video frames can be well determined.

In some embodiments, the computer device may determine the motion vector residuals and the intra-frame prediction proportion according to the entropy-decoded target video frames, in order to complete a subsequent process when determining the target video bitrate.

In an embodiment, the step S203 includes following steps. A predetermined second adjustment parameter and a predetermined third adjustment parameter are obtained, where the second adjustment parameter is less than the third adjustment parameter. The estimated video bitrate is multiplied by the second adjustment parameter to obtain a first weighted estimated video bitrate, and multiplied by the third adjustment parameter to obtain a second weighted estimated video bitrate. The actual video bitrate is compared with the first weighted estimated video bitrate and the second weighted estimated video bitrate to obtain a result. The first relative relationship is obtained according to the result.

Magnitude of the second adjustment parameter $k_2$ and of the third adjustment parameter $k_3$ may be determined according to an actual situation. For example, the second adjustment parameter $k_2$ is equal to 0.5, and the third adjustment parameter $k_3$ is equal to 1.5.

In an embodiment, the first relative relationship may be represented by $Skip_{dec}$. In an embodiment, the step of obtaining the first relative relationship according to includes following steps. In a case that the actual video bitrate is greater than the first weighted estimated video bitrate and less than the second weighted estimated video bitrate, the first relative relationship is determined to reflect a difference between video bitrates being small. In a case that the actual video bitrate is less than or equal to the first weighted estimated video bitrate, the first relative relationship is determined to reflect the difference between video bitrates being large. In a case that the actual video bitrate is greater than or equal to the second weighted estimated video bitrate, the first relative relationship is determined to reflect the difference between video bitrates being large.

Optionally, $Bitrate_{in}$ represents the actual video bitrate, $k_2Bitrate_{judge}$ represents the first weighted estimated video bitrate, and $k_3Bitrate_{judge}$ represents the second weighted estimated video bitrate.

An equation for determining the first relative relationship may be as follows:

$$Skip_{dec} = \begin{cases} 1 & k_2Bitrate_{judge} < Bitrate_{in} < k_3Bitrate_{judge} \\ 0 & k_2Bitrate_{judge} \geq Bitrate_{in} \ \ or \ \ k_3Bitrate_{judge} \leq Bitrate_{in} \end{cases}$$

$Skip_{dec} = 1$ indicates the difference between video bitrates being small, and $Skip_{dec} = 0$ indicates the difference between video bitrates being large.

In this embodiment, the computer device adjusts the estimated video bitrate with the adjustment parameters, and then compares the adjusted estimated video bitrate with the actual video bitrate. Different values of the adjustment parameters may be determined on requirement, and accordingly different first relative relationships may be obtained. Thereby, adaptive transcoding can be achieved.

In an embodiment, the step S204 includes following steps. A reference video bitrate meeting the bitrate requirement information is obtained. In a case that the first relative relationship reflects the difference between video bitrates being small, the reference video bitrate serves as the target video bitrate. In a case that the first relative relationship reflects the difference between video bitrates being large, information on a degree of decoding complexity of the target video frames is obtained, a candidate video bitrate of the to-be-transcoded video is obtained according to the information on the degree of decoding complexity, and the target video bitrate is determined according to the candidate video bitrate.

When using the reference video bitrate $Br_o$ that meets the bitrate requirement information, a corresponding video quality is satisfactory to a user and meets a service requirement, without consuming excessive bandwidth. For example, the reference video bitrate of a video in Moments of the WeChat™ platform is generally 1.6 Mbps for transcoding.

The information on the degree of decoding complexity is capable to represent a degree of complexity of a texture in the video during a decoding process. Such information may include an intra-frame prediction proportion $Intra$, a motion vector residual $Mvd$, or the like.

In this embodiment, in a case that the difference between video bitrates is small, the computer device determines the reference video bitrate to be the target video bitrate directly. That is, it is not necessary to further process, for example, decode, the target video frames. Thereby, efficiency of determining the video bitrate is effectively improved. Otherwise, in a case that the difference between video bitrates is large, the computer device determines a new video bitrate (that is, the candidate video bitrate) according to a feature of the target video frames, so as to determine a final target video bitrate. Therefore, the determined target video bitrate can be pertinent to quality of the to-be-transcoded video, and thereby meet a requirement.

In an embodiment, the information on the degree of decoding complexity includes a motion vector residual and an intra-frame prediction proportion. The motion vector residual is configured to represent a relationship between a current decoding block and an adjacent prediction block in a corresponding target video frame, and the intra-frame prediction proportion is configured to represent a proportion of decoding blocks adopting an intra-frame prediction mode among all decoding blocks of a corresponding target video frame. The step of determining the candidate video bitrate of the to-be-transcoded video according to the information on the degree of decoding complexity includes following steps. A quantity of the selected target video frames is determined. A mean motion vector residual of the target video frames is obtained according to the motion vector residuals and the quantity of the selected target video frames. A mean intra-frame prediction proportion of the target video frames is obtained according to the intra-frame prediction proportions and the quantity of the selected target video frames. The candidate video bitrate is obtained according to the reference video bitrate, the mean motion vector residual, and the mean intra-frame prediction proportion.

In this embodiment, the computer device calculates the candidate video bitrate based on the mean motion vector residual $Mvd_{mean}$ and the mean intra-frame prediction proportion $Intra_{mean}$. Generally, the more complex a video scenario is, the larger the $Mvd_{mean}$ is expected. $Intra_{mean}$ represents a proportion of selecting the intra-frame prediction mode during video coding. Generally, the more complex content of a video texture is, the higher the proportion of selecting the intra-frame prediction mode is expected.

In an embodiment, the computer device may calculate the mean motion vector residual $Mvd_{mean}$ and the mean intra-frame prediction proportion $Intra_{mean}$ based on the following equations:

$$Mvd_{mean} = (\sum_{i \in M} Mvd_i) / M$$

$$Intra_{mean} = (\sum_{i \in M} Intra_i) / M .$$

In an embodiment, the candidate video bitrate $Br_{trans}$ may be determined based on a following equation:

$$Br_{trans} = \frac{Mvd_{mean} Intra_{mean}}{T} Br_o ,$$

where T is a constant and may be adjusted according to an actual application scenario.

In an embodiment, the step of determining the target video bitrate according to the candidate video bitrate includes following steps. A pre-determined critical bitrate is obtained, where the critical bitrate is pre-determined according to information on one or both of a bandwidth and video quality of the target service platform, and represents a range for the target video bitrate. The target video bitrate is determined according to a second relative relationship between the critical bitrate and the candidate video bitrate.

The critical bitrate is a limitation on a final transcoded video, that is, the target bitrate needs to be within the range represented by the critical bitrate. Through setting the critical bitrate, a video bitrate of a to-be-transcoded video with excessively high video quality is decreased, and a video bitrate of a to-be-transcoded video with excessively low video quality is increased.

The information on the bandwidth may be a requirement of a network environment of the target service platform on a network bandwidth. The information on the video quality may be a requirement of the target service platform on a definition of a video, a sound effect, a degree of complexity of a texture, or the like.

In an embodiment, the critical bitrate includes a maximum video bitrate and a minimum video bitrate. The step of determining the target video bitrate according to the second relative relationship between the critical bitrate and the candidate video bitrate includes following steps. In a case that the candidate video bitrate is greater than the minimum video bitrate and less than the maximum video bitrate, it is determined that the candidate video bitrate serves as the target video bitrate. In a case that the candidate video bitrate is less than or equal to the minimum video bitrate, it is determined that the minimum video bitrate serves as the target video bitrate. In a case that the candidate video bitrate is greater than or equal to the maximum video bitrate, it is determined that the maximum video bitrate serves as the target video bitrate.

An optional equation for determining the target video bitrate $Br_{final}$ may be:

$$Br_{final} = \begin{cases} Br_{trans} & Br_{\min} < Br_{trans} < Br_{\max} \\ Br_{\min} & Br_{\min} \geq Br_{trans} \\ Br_{\max} & Br_{\max} \leq Br_{trans} \end{cases}.$$

The step of obtaining the pre-determined critical bitrate includes a following step. The maximum video bitrate is determined according to information on the bandwidth of the target service platform, and the minimum video bitrate is determined according to information on the video quality of the target service platform. Optionally, the maximum bitrate $Br_{max}$ is empirically determined, mainly based on a bandwidth limit. For example, when a service requires a maximum uploading rate not exceeding 3.2 Mbps, the maximum bitrate $Br_{max}$ may be set as 3.2 Mbps. Further, the minimum bitrate $Br_{min}$ is empirically determined based on a requirement of the service. The minimum bitrate is necessary to guarantee the required video quality. For example, the minimum bitrate is set as 0.6 Mbps. In another embodiment, the maximum bitrate may be determined according to information on the video quality, and the minimum bitrate may be determined according to information on the bandwidth.

In an embodiment, after the step S204, the method further includes following steps. The to-be-transcoded video is transcoded according to the target video bitrate to obtain a transcoded video. The transcoded video is played on the target service platform via a client.

The client may be a terminal device of various types, for example, a smartphone, a PC, or the like. An application program corresponding to the target service platform may be installed in the client. After receiving the transcoded video, the client plays the transcoded video in an interface of the corresponding application program.

In an embodiment, the computer device when transcoding may display an interface as shown in the left subfigure of Figure 3 to prompt a user that the transcoding is being performed. When the transcoding is completed, the computer device may display the interface as shown in the right subfigure of Figure 3, for example, display a message "transcoding completed, the video is upcoming". It is appreciated that the transcoding may alternatively be a complete background progress in the computer device, without being displayed in the interface of the client. When obtained, the corresponding transcoded video is directly displayed in the interface.

In some embodiments, after receiving the transcoded video, the client may further perform another processing besides playing the video, for example, may adjust a definition of the video.

In some embodiments, the computer device may obtain information on a definition selected for the video, which is inputted via the client, and determine the target video bitrate additionally based on the definition, so as to obtain a video meet a requirement of the user. Thereby, user experience of the target service platform is improved.

In this embodiment, after determining the target video bitrate, the computer device plays the corresponding transcoded video on the service platform via the client. Thereby, the corresponding transcoded video is outputted via the client.

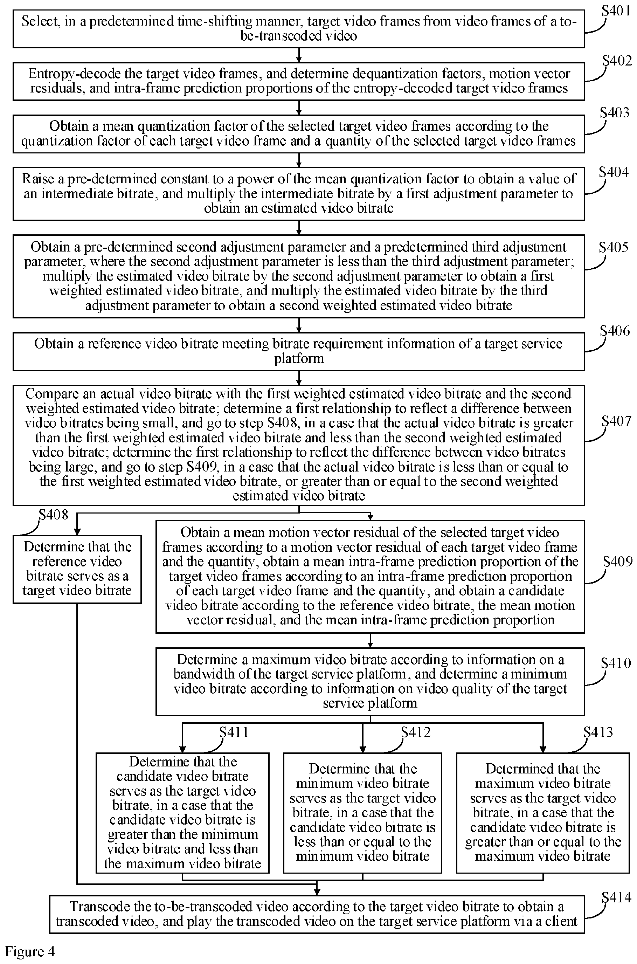

In an embodiment, a method for determining a video bitrate is provided as shown in Figure 4. The method is performed by a computer device, and includes following steps S401 to S414.

In step S401, target video frames are selected, in a predetermined time-shifted manner, from video frames of a to-be-transcoded video.

In step S402, the target video frames are entropy-decoded, and quantization factors, motion vector residuals, and intra-frame prediction proportions of the entropy-decoded target video frames are determined.

In step S403, a mean quantization factor of the selected target video frames is obtained according to the quantization factor of each target video frame and a quantity of the selected target video frames.

In step S404, a pre-determined constant is raised to a power of the mean quantization factor to obtain a value of an intermediate bitrate, and the intermediate bitrate is multiplied by a first adjustment parameter to obtain an estimated video bitrate.

In step S405, a pre-determined second adjustment parameter and a predetermined third adjustment parameter are obtained, where the second adjustment parameter is less than the third adjustment parameter, the estimated video bitrate is multiplied by the second adjustment parameter to obtain a first weighted estimated video bitrate, and the estimated video bitrate is multiplied by the third adjustment parameter to obtain a second weighted estimated video bitrate.

In step S406, a reference video bitrate meeting bitrate requirement information of a target service platform is obtained.

In step S407, an actual video bitrate is compared with the first weighted estimated video bitrate and the second weighted estimated video bitrate. In a case that the actual video bitrate is greater than the first weighted estimated video bitrate and less than the second weighted estimated video bitrate, a first relative relationship is determined to reflect a difference between video bitrates being small, and the process goes to step S408. In a case that the actual video bitrate is less than or equal to the first weighted estimated video bitrate, or that the actual video bitrate is greater than or equal to the second weighted estimated video bitrate, the first relative relationship is determined to reflect the difference between video bitrates being large, and the process goes to step S409.

In step S408, it is determined that the reference video bitrate serves as a target video bitrate.

In step S409, a mean motion vector residual of the selected target video frames is obtained according to a motion vector residual of each target video frame and the quantity, a mean intra-frame prediction proportion of the target video frames is obtained according to an intra-frame prediction proportion of each target video frame and the quantity, and a candidate video bitrate is obtained according to the reference video bitrate, the mean motion vector residual, and the mean intra-frame prediction proportion.

In step S410, a maximum video bitrate is determined according to information on a bandwidth of the target service platform, and a minimum video bitrate is determined according to information on video quality of the target service platform.

In step S411, it is determined that the candidate video bitrate serves as the target video bitrate, in a case that the candidate video bitrate is greater than the minimum video bitrate and less than the maximum video bitrate.

In step S412, it is determined that the minimum video bitrate serves as the target video bitrate, in a case that the candidate video bitrate is less than or equal to the minimum video bitrate.

In step S413, it is determined that the maximum video bitrate serves as the target video bitrate, in a case that the candidate video bitrate is greater than or equal to the maximum video bitrate.

In step S414, the to-be-transcoded video is transcoded according to the target video bitrate to obtain a transcoded video, and the transcoded video is played on the target service platform via a client.

The method for determining the video bitrate is provided according to the above embodiment. The computer device selects the target video frames of a certain quantity from the to-be-transcoded video, which can reduce an amount of computation when determining the bitrate. The computer device determines the estimated video bitrate of the to-be-transcoded video according to the bitrate feature information of the target video frames, obtains the relative relationship between the estimated video bitrate and the actual video bitrate of the to-be-transcoded video, and obtains the target video bitrate of the to-be-transcoded video according to the relationship and the bitrate requirement information of the target service platform. Therefore, the video bitrate of the to-be-transcoded video can be rapidly determined according to a degree of complexity of the video.

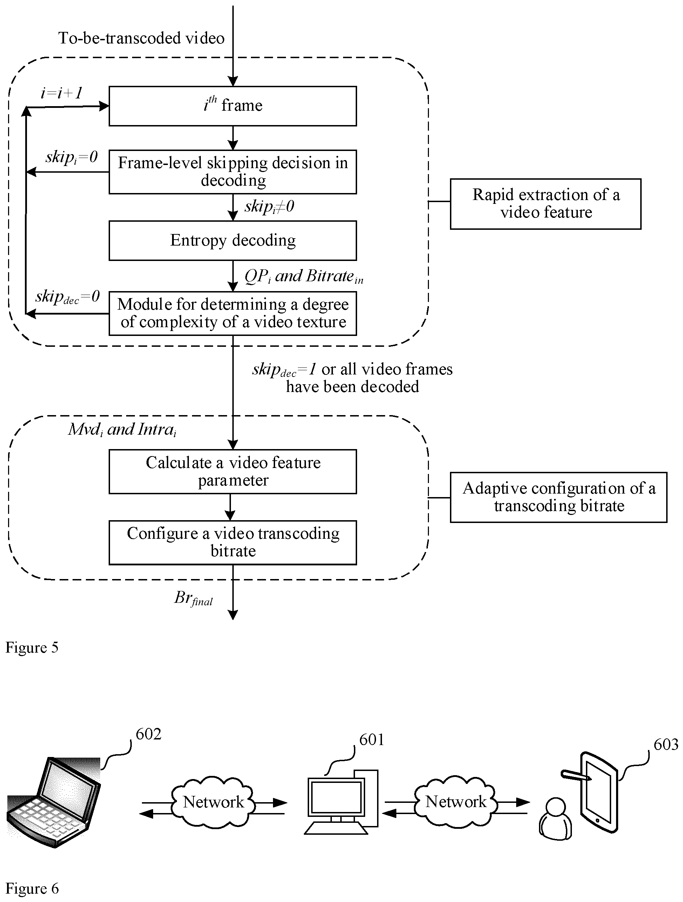

Reference is made to Figure 5 for better understanding of the foregoing method, where an exemplary application of a method for determining a video bitrate is illustrated according to an embodiment of the present disclosure. An actual scenario of the exemplary application instance may be as shown in Figure 6. The method for determining the video bitrate is applied to a terminal device 601. The terminal device 601 receives a to-be-transcoded video uploaded by a client 602, determines a target video bitrate of the to-be-transcoded video, transcodes the to-be-transcoded video based on the target video bitrate to obtain a transcoded video, and plays the transcoded video via a client 603.

## 1. Rapid Extraction of Video Sequence Feature

The terminal device 601 obtains the to-be-transcoded video uploaded by the client 602, and extracts each video frame from the to-be-transcoded video.

Frame-level skipping decision is performed on video frames of the to-be-transcoded video based on a following equation:

$$skip_i = \begin{cases} 1 & i\%N = 0 \\ 0 & i\%N \neq 0 \end{cases},$$

where "%" is a remainder operator, $i$ represents a sequential number of a current frame. $skip_i=1$ indicates the current frame would be decoded, and $skip_i=0$ indicates the current frame would be skipped.

An to-be-decoded $i^{th}$ frame, which is a target frame, is entropy-decoded through a corresponding mode. Thereby, a quantization factor $QP_i$, a motion vector residual $Mvd_i$, and an intra-frame prediction proportion $Intra_i$, which correspond to each target video frame, are obtained. An ultimate goal of normal video decoding is to reconstruct a compressed video data stream into video images that can be displayed in an interface. Dequantization, inverse conversion, intra-frame prediction, motion compensation, and loop filtering are all necessary processing in the decoding , for implementing reconstruction of the final video images. In comparison, this embodiment aims to perform adaptive bitrate decision based on relevant parameters, and an ultimate goal is not to reconstruct video images. Therefore, it is only necessary to extract some parameters, i.e. the quantization factor $QP_i$, the motion vector residual $Mvd_i$, and the intra-frame prediction proportion $Intra_i$.

It is rapidly determined whether adaptive bitrate adjustment needs to be performed on the video, so as to reduce a degree of complexity in algorithms effectively. Hence, the extracted coding parameters are inputted into a module for determining a degree of complexity of a video texture. In a case that such parameters meet a decision criteria (i.e. $skip_{dec}=1$), decoding of the remaining video frames is skipped, and a process enters a stage of setting a transcoding bitrate directly. Otherwise, information is further extracted from another video frame. The above process may be repeated until all the video frames are decoded.

A specific decision process is as follows.

First, a mean quantization factor $QP_{mean}$ of $M$ frames, which are first decoded, is calculated based on

$$QP_{mean} = (\sum_{i \in M} QP_i) / M .$$

A bitrate $Bitrate_{judge}$, which the to-be-transcoded video is expected to have (that is, an estimated video bitrate) is estimated according to the mean quantization factor $QP_{mean}$ based on:

$$Bitrate_{judge} = k_1 \times 0.5^{(QP_{mean}/5-\delta)}$$

Where $k_1$ and $\delta$ are adjustment parameters.

It is determined whether the decoding is to be skipped according to a first relative relationship between an actual video bitrate $Bitrate_{in}$ and the estimated video bitrate $Bitrate_{judge}$ of the to-be-transcoded video. The determination is optionally as described by the following equation:

$$Skip_{dec} = \begin{cases} 1 & k_2 Bitrate_{judge} < Bitrate_{in} < k_3 Bitrate_{judge} \\ 0 & k_2 Bitrate_{judge} \geq Bitrate_{in} \ or \ k_3 Bitrate_{judge} \leq Bitrate_{in} \end{cases},$$

where $k_2$ and $k_3$ are corresponding adjustment parameters.

$Skip_{dec}$ represents whether the subsequent decoding is to be skipped. $Skip_{dec}=1$ indicates that the decoding would be skipped, and $Skip_{dec}=1$ indicates that the decoding would not be skipped. Herein, calculating $Skip_{dec}$ may be considered as determining the degree of complexity of a texture coarsely based on the first relative relationship between the estimated video bitrate and the actual video bitrate, and accordingly determining whether the decoding is to be skipped.

## 2. Adaptive Configuration of Transcoding Bitrate

First, corresponding video feature parameters are calculated to obtain a mean motion vector residual $Mvd_{mean}$

and a mean intra-frame prediction proportion $Intra_{mean}$ based on following equations:

$$Mvd_{mean} = (\sum_{i \in M} Mvd_i) / M$$

$$Intra_{mean} = (\sum_{i \in M} Intra_i) / M \quad .$$

Then, the process enters the stage of setting the transcoding bitrate. A scenario of a target service platform in the client 603 is determined, and a requirement on video transcoding is determined. Accordingly, a reference bitrate $Br_o$, a maximum bitrate $Br_{max}$, and a minimum bitrate $Br_{min}$ are determined.

It may have been determined that a video sequence would be skipped, that is, $skip_{dec}=1$, in the previous stage of determining the degree of complexity of the texture during extracting the video feature. In such case, a transcoding bitrate of such video sequence is directly set as the reference bitrate $Br_o$. Otherwise, the transcoding bitrate is configured and adjusted according to a mean value throughout the entire video.

Optionally, the transcoding bitrate is first calculated based on the mean motion vector residual and the mean intra-frame prediction proportion. $Mvd_{mean}$ represents the mean motion vector residual. Generally, the more complex a video scenario is, the larger the $Mvd_{mean}$ is. $Intra_{mean}$ represents the mean intra-frame prediction proportion during video coding. Generally, the more complex content of a video texture is, the larger the $Intra_{mean}$ is. According to these to parameters, the bitrate is configured and adjusted based on:

$$Br_{trans} = \frac{Mvd_{mean} Intra_{mean}}{T} Br_o ,$$

where T is a constant coefficient.

A final target transcoding bitrate $Br_{final}$ is configured according to an upper limit and a lower limit on the bitrate, that is:

$$Br_{final} = \begin{cases} Br_o & Skip_{dec} = 1 \\ Br_{trans} & Skip_{dec} = 0 \ and \ Br_{min} < Br_{trans} < Br_{max} \\ Br_{min} & Skip_{dec} = 0 \ and \ Br_{min} \geq Br_{trans} \\ Br_{max} & Skip_{dec} = 0 \ and \ Br_{max} \leq Br_{trans} \end{cases} \quad .$$

The to-be-transcoded video is transcoded according to the target transcoding bitrate to obtain a transcoded video. The bitrate of the transcoded video is the target transcoding bitrate, and the transcoded video is transmitted to the client 603. Thereby, the transcoded video is played on the target service platform in the client 603.

The method for determining the video bitrate is provided according to this embodiment of the present disclosure. The video transcoding bitrate can be configured adaptively and rapidly. Quality of the transcoded video is effectively improved, while calculation in pre-analysis is less complex when configuring the bitrate.

Although steps in the foregoing flowcharts are displayed in sequences indicated by arrows, such steps are not necessarily performed in such sequence. Unless explicitly specified otherwise herein, the sequence of executing the steps is not strictly limited, and the steps may be performed in another sequence. Moreover, at least some of the steps in the foregoing flowcharts may include multiple sub-steps or multiple stages. The sub-steps or stages are not necessarily performed at the same moment, but may be performed at different moments. The sub-steps or stages are not necessarily performed sequentially, but may be performed in turn or alternately with at least some of other steps, or with sub-steps or stages of another step.

Based on the same concept as the method in the foregoing embodiments, an apparatus for determining a video bitrate is further provided according to an embodiment of the present disclosure. The apparatus may be configured to perform the forgoing method for determining the video bitrate. In order to facilitate illustration, only parts that are relevant to embodiments of the present disclosure are shown in a schematic structural diagram of the apparatus. Those skilled in the art may appreciate that a structure as shown in the diagram does not constitute a limitation to the apparatus, that is, the apparatus may include more or fewer components than those as shown in the diagram, some components may be combined, or a different component deployment may be utilized.

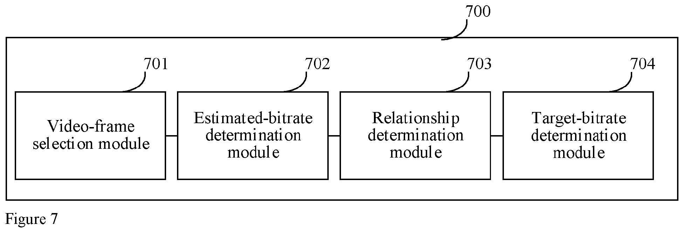

In an embodiment, an apparatus for determining a video bitrate is provided, as shown in Figure 7. The apparatus includes a video-frame selection module 701, an estimated-bitrate determination module 702, a relationship determination module 703, and a target-bitrate determination module 704.

The video-frame selection module 701 is configured to select target video frames from video frames of a to-be-transcoded video in a time-shifted manner.

The estimated-bitrate determination module 702 is configured to determine an estimated video bitrate of the to-be-transcoded video according to bitrate feature information of the target video frames.

The relationship determination module 703 is configured to obtain a first relative relationship between the estimated video bitrate and an actual video bitrate of the to-be-transcoded video.

The target-bitrate determination module 704 is configured to determine a target video bitrate of the to-be-transcoded video according to the first relative relationship and bitrate requirement information of a target service platform. The target service platform is a service platform to which the to-be-transcoded video is applied after being transcoded.

The apparatus for determining the video bitrate is provided according to the above embodiment. The target video frames of a certain quantity are selected from the to-be-transcoded video, which can reduce an amount of computation when determining the bitrate. The estimated video bitrate of the to-be-transcoded video is determined according to the bitrate feature information of the target video frames, the relative relationship between the estimated video bitrate and the actual video bitrate of the to-be-transcoded video is obtained, and the target video bitrate of the to-be-transcoded video is obtained according to the relationship and the bitrate requirement information of the target service platform. Therefore, the video bitrate of the to-be-transcoded video can be rapidly determined according to a degree of complexity of the video.

In an embodiment, the bitrate feature information includes a quantization factor. The quantization factor is configured to represent a degree of quantization for a corresponding one of the target video frames. The estimated-bitrate determination module includes a frame-quantity determination submodule, a quantization-factor determination submodule, and an estimated-bitrate determination submodule. The frame-quantity determination submodule is configured to determine a quantity of the selected target video frames. The quantization-factor determination submodule is configured to obtain a mean quantization factor according to the quantization factors and the quantity of the selected target video frames. The estimated-bitrate determination submodule is configured to obtain the estimated video bitrate according to the mean quantization factor.

In an embodiment, the estimated-bitrate determination submodule includes an intermediate-value determination unit and an estimated-bitrate determination unit. The intermediate-value determination unit is configured to raise a predetermined constant to a power of the mean quantization factor to obtain a value of an intermediate bitrate. The estimated-bitrate determination unit is configured to multiply the intermediate bitrate by a first adjustment parameter to obtain the estimated video bitrate. The first adjustment parameter is determined according to a resolution of the to-be-transcoded video.

In an embodiment, the apparatus for determining the video bitrate further includes an entropy-decoding module and a quantization-factor determination module. The entropy-decoding module is configured to entropy-decode the target video frames. The quantization-factor determination module is configured to determine the quantization factors according to the entropy-decoded target video frames.

In an embodiment, the relationship determination module includes an adjustment-parameter determination submodule, a weighted-bitrate determination submodule, and a relationship determination submodule. The adjustment-parameter determination submodule is configured to obtain a predetermined second adjustment parameter and a predetermined third adjustment parameter. The second adjustment parameter is less than the third adjustment parameter. The weighted-bitrate determination submodule is configured to multiply the estimated video bitrate by the second adjustment parameter to obtain a first weighted estimated video bitrate, and multiply the estimated video bitrate by the third adjustment parameter to obtain a second weighted estimated video bitrate. The relationship determination submodule is configured to compare the actual video bitrate with the first weighted estimated video bitrate and the second weighted estimated video bitrate to obtain a result, and obtain the first relative relationship according to the result.

In an embodiment, the relationship determination submodule includes a first relative relationship determination unit, a second relative relationship determination unit, and a third relationship determination unit. The first relative relationship determination unit is configured to determine that the first relative relationship reflects a difference between video bitrates being small, in a case that the actual video bitrate is greater than the first weighted estimated video bitrate and less than the second weighted estimated video bitrate. The second relative relationship determination unit is configured to determine that the first relative relationship reflects the difference between video bitrates being large, in a case that the actual video bitrate is less than or equal to the first weighted estimated video bitrate. The third relationship determination unit is configured to determine that the first relative relationship reflects the difference between video bitrates being large, in a case that the actual video bitrate is greater than or equal to the second weighted estimated video bitrate.

In an embodiment, the target-bitrate determination module includes a reference-bitrate determination submodule, a first target-bitrate determination submodule, and a second target-bitrate determination submodule. The reference-bitrate determination submodule is configured to obtain a reference video bitrate that meets the bitrate requirement information. The first target-bitrate determination submodule is configured to determine that the reference video bitrate serves as the target video bitrate, in a case that the first relative relationship reflects the difference between video bitrates being small. The second target-bitrate determination submodule is configured to: obtain information on a degree of decoding complexity of the target video frames, obtain a candidate video bitrate of the to-be-transcoded video according to the information on the degree of decoding complexity, and determine the target video bitrate according to the candidate video bitrate, in a case that the first relative relationship reflects the difference between video bitrates being large.

In an embodiment, the information on the degree of decoding complexity includes a motion vector residual and an intra-frame prediction proportion. The motion vector residual is configured to represent a relationship between a current decoding block and an adjacent prediction block in the corresponding target video frame, and the intra-frame prediction proportion is configured to represent a proportion of decoding blocks, which adopt an intra-frame prediction mode, among all decoding blocks of a corresponding target video frame. The second target-bitrate determination submodule includes a frame-quantity determination unit, a motion-vector-residual determination unit, an intra-frame-prediction-proportion determination unit, and a candidate-bitrate determination unit. The frame-quantity determination unit is configured to determine a quantity of the selected target video frames. The motion-vector-residual determination unit is configured to obtain a mean motion vector residual of the target video frames according to the motion vector residuals and the quantity of the selected target video frames. The intra-frame prediction proportion determination unit is configured to obtain a mean intra-frame prediction proportion of the target video frames according to the intra-frame prediction proportions and the quantity of the selected target video frames. The candidate-bitrate determination unit is configured to obtain the candidate video bitrate according to the reference video bitrate, the mean motion vector residual, and the mean intra-frame prediction proportion.

In an embodiment, the second target-bitrate determination submodule includes a critical-value obtaining unit and a target-bitrate determination unit. The critical-value obtaining unit is configured to obtain a pre-determined critical bitrate. The critical bitrate is determined according to information on one or both of a bandwidth and video quality of the target service platform, and represents a range for the target video bitrate. The target-bitrate determination unit is configured to determine the target video bitrate according to a second relative relationship between the critical bitrate and the candidate video bitrate.

In an embodiment, the critical bitrate includes a maximum video bitrate and a minimum video bitrate. The target bitrate determination unit includes a first target bitrate determination subunit, a second target bitrate determination subunit, and a third target bitrate determination subunit. The first target bitrate determination subunit is configured to determine that the candidate video bitrate serves as the target video bitrate, in a case that the candidate video bitrate is greater than the minimum video bitrate and less than the maximum video bitrate. The second target bitrate determination subunit is configured to determine that the minimum video bitrate serves as the target video bitrate, in a case that the candidate video bitrate is less than or equal to the minimum video bitrate. The third target bitrate determination subunit is configured to determine that the maximum video bitrate serves as the target video bitrate, in a case that the candidate video bitrate is greater than or equal to the maximum video bitrate.

In an embodiment, the critical-value obtaining unit includes a maximum-bitrate obtaining subunit and a minimum-bitrate obtaining subunit. The maximum-bitrate obtaining subunit is configured to determine the maximum video bitrate according to information on the bandwidth of the target service platform. The minimum-bitrate obtaining subunit is configured to determine the minimum video bitrate according to information on the video quality of the target service platform.

In an embodiment, the apparatus for determining a video bitrate further includes a transcoding module and a video playing module. The transcoding module is configured to transcode the to-be-transcoded video according to the target video bitrate to obtain a transcoded video. The video playing module is configured to play the transcoded video on the target service platform via a client.

The apparatus for determining the video bitrate in the above embodiments corresponds to the method for determining the video bitrate in the forgoing embodiments of the present disclosure. The technical features and beneficial effects described in the method embodiments also apply to the apparatus embodiments. It is noted that details of the apparatus embodiments may refer to description of the method embodiments.

In addition, in the forgoing apparatus embodiments, logic division of program modules is merely exemplary for illustration. In practice, the foregoing functions may be allocated to and completed by different functional modules on requirement, for example, concerning a configuration of corresponding hardware, or convenience of software implementation. That is, an internal structure of the apparatus for determining the video bitrate may be divided into different program modules, which implement all or some of the functions described above.

In an embodiment, an apparatus for determining a video bitrate may be implemented through computer-readable instructions. The computer-readable instructions may be executed on the computer device as shown in Figure 1. A memory of the computer device may store program modules that included in the apparatus for determining the video bitrate, for example, the video-frame selection module, the estimated-bitrate determination module, the relationship determination module, and the target-bitrate determination module, as shown in Figure 7. The computer-readable instructions including the program modules configure the processor to perform steps in the method according to the embodiments described herein.

For example, the computer device as shown in Figure 1 may perform the step S201 to the step S204 through the video-frame selection module, the estimated-bitrate determination module, the relationship determination module, and the target-bitrate determination module, respectively, which are in the apparatus for determining the video bitrate as shown in Figure 7.

In an embodiment, a computer device is provided. The computer device includes a memory and a processor. The memory stores computer-readable instructions. The computer-readable instructions, when executed by the processor, configure the processor to perform steps of the forgoing method for determining the video bitrate. Herein, the steps of the forgoing method for determining the video bitrate may refer to steps in the forgoing method embodiments.

In an embodiment, a computer-readable storage medium is provided. The computer-readable storage medium stores computer-readable instructions. The computer-readable instructions, when executed by a processor, configure the processor to perform steps of the forgoing method for determining the video bitrate. Herein, the steps of the forgoing method for determining the video bitrate may refer to steps in the forgoing method embodiments.

In an embodiment, a computer-readable instruction product or computer-readable instructions are provided. The computer-readable instruction product or the computer-readable instructions include computer instructions. The computer instructions being stored in a computer-readable storage medium. A processor of a computer device reads the computer instructions from the computer-readable storage medium, and the processer when executing the computer-readable instructions configure the computer device to perform the steps in the foregoing method embodiments.

Those skilled in the art may understand that all or some of procedures of the method in the foregoing embodiments may be implemented by a computer program instructing relevant hardware. The program may be stored in a non-volatile computer-readable storage medium. The procedures of the foregoing method embodiments may be implemented when the program is executed. All references to the memory, the storage, the database, or other medium used in embodiments of the present disclosure may include a non-volatile and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a RAM or an external cache. By way of description rather than limitation, the RAM may be implemented in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

Technical features of the foregoing embodiments may be arbitrarily combined. In order to make description concise, not all possible combinations of the technical features in the foregoing embodiments are described. The combinations of these technical features shall be considered as falling within the scope covered by this specification as long as there is no conflict.

The foregoing embodiments only show some implementations of the present disclosure, and are described in detail. These embodiments should not be construed as a limitation on the scope of the present disclosure. Several transformations and improvements can be made by those skilled in the art without departing from the concept of the present disclosure, and belong to the protection scope of the present disclosure. Therefore, the protection scope of the present disclosure shall be subject to the appended claims.

**Claims**

1. A method for determining a video bitrate, executable by a computer device, comprising:

   selecting, in a time-shifted manner, target video frames from video frames of a to-be-transcoded video;
   determining an estimated video bitrate of the to-be-transcoded video according to bitrate feature information of the target video frames;
   obtaining a first relative relationship between the estimated video bitrate and an actual video bitrate of the to-be-transcoded video; and
   determining a target video bitrate of the to-be-transcoded video according to the first relative relationship and bitrate requirement information of a target service platform.

2. The method according to claim 1, wherein the bitrate feature information comprises a quantization factor, and the quantization factor is configured to represent a degree of quantization for a corresponding one of the target video frames; and
wherein determining the estimated video bitrate of the to-be-transcoded video according to the bitrate feature information of the target video frames comprises:

> determining a quantity of the selected target video frames;
> obtaining a mean quantization factor according to the quantization factors and the quantity of the selected target video frames; and
> obtaining the estimated video bitrate according to the mean quantization factor.

3. The method according to claim 2, wherein obtaining the estimated video bitrate according to the mean quantization factor comprises:

> raising a pre-determined constant to a power of the mean quantization factor to obtain a value of an intermediate bitrate; and
> multiplying the intermediate bitrate by a first adjustment parameter to obtain the estimated video bitrate, wherein the first adjustment parameter is determined according to a resolution of the to-be-transcoded video.

4. The method according to claim 2, wherein before determining the estimated video bitrate of the to-be-transcoded video according to the bitrate feature information of the target video frames, the method further comprises:

> entropy-decoding the target video frames; and
> determining the quantization factors according to the entropy-decoded target video frames.

5. The method according to claim 1, wherein obtaining the first relative relationship between the estimated video bitrate and the actual video bitrate of the to-be-transcoded video comprises:

> obtaining a predetermined second adjustment parameter and a predetermined third adjustment parameter;
> multiplying the estimated video bitrate by the second adjustment parameter to obtain a first weighted estimated video bitrate, and multiplying the estimated video bitrate by the third adjustment parameter to obtain a second weighted estimated video bitrate; and
> comparing the actual video bitrate with the first weighted estimated video bitrate and the second weighted estimated video bitrate to obtain a result, and obtaining the first relative relationship according to the result.

6. The method according to claim 5, wherein obtaining the first relative relationship according to the result comprises:

> determining that the first relative relationship reflects a difference between video bitrates being small, in a case that the actual video bitrate is greater than the first weighted estimated video bitrate and less than the second weighted estimated video bitrate;
> determining that the first relative relationship reflects the difference between video bitrates being large, in a case that the actual video bitrate is less than or equal to the first weighted estimated video bitrate; and
> determining that the first relative relationship reflects the difference between video bitrates being large, in a case that the actual video bitrate is greater than or equal to the second weighted estimated video bitrate.

7. The method according to claim 6, wherein determining the target video bitrate of the to-be-transcoded video according to the first relative relationship and the bitrate requirement information of the target service platform comprises:

> obtaining a reference video bitrate that meets the bitrate requirement information;
> determining that the reference video bitrate serves as the target video bitrate, in a case that the first relative relationship reflects the difference between video bitrates being small; and
> obtaining information on a degree of decoding complexity of the target video frames, obtaining a candidate video bitrate of the to-be-transcoded video according to the information on the degree of decoding complexity, and determining the target video bitrate according to the candidate video bitrate, in a case that the first relative relationship reflects the difference between video bitrates being large.

8. The method according to claim 7, wherein the decoding complexity information comprises a motion vector residual and an intra-frame prediction proportion;

wherein the motion vector residual is configured to represent a relationship between a current decoding block and an adjacent prediction block in the corresponding target video frame;

wherein the intra-frame prediction proportion is configured to represent a proportion of decoding blocks, which adopt an intra-frame prediction mode, among all decoding blocks of a corresponding target video frame; and

wherein determining the candidate video bitrate of the to-be-transcoded video according to the information on the degree of decoding complexity comprises:

> determining a quantity of the selected target video frames;
>
> obtaining a mean motion vector residual of the target video frames according to the motion vector residuals and the quantity of the selected target video frames;
>
> obtaining a mean intra-frame prediction proportion of the target video frames according to the intra-frame prediction proportions and the quantity of the selected target video frames; and
>
> obtaining the candidate video bitrate according to the reference video bitrate, the mean motion vector residual, and the mean intra-frame prediction proportion.

9. The method according to claim 7, wherein determining the target video bitrate according to the candidate video bitrate comprises:

> obtaining a pre-determined critical bitrate, wherein the critical bitrate is determined according to information on one or both of a bandwidth and video quality of the target service platform, and represents a range for the target video bitrate; and
>
> determining the target video bitrate according to a second relative relationship between the critical bitrate and the candidate video bitrate.

10. The method according to claim 9, wherein the critical bitrate comprises a maximum video bitrate and a minimum video bitrate; and

wherein determining the target video bitrate according to the second relative relationship between the critical bitrate and the candidate video bitrate comprises:

> determining that the candidate video bitrate serves as the target video bitrate, in a case that the candidate video bitrate is greater than the minimum video bitrate and less than the maximum video bitrate;
>
> determining that the minimum video bitrate serves as the target video bitrate, in a case that the candidate video bitrate is less than or equal to the minimum video bitrate; and
>
> determining that the maximum video bitrate serves as the target video bitrate, in a case that the candidate video bitrate is greater than or equal to the maximum video bitrate.

11. The method according to claim 10, wherein obtaining the pre-determined critical bitrate comprises:

> determining the maximum video bitrate according to information on the bandwidth of the target service platform; and
>
> determining the minimum video bitrate according to information on the video quality of the target service platform.

12. The method according to any one of claims 1 to 11, wherein after determining the target video bitrate of the to-be-transcoded video according to the first relative relationship and the bitrate requirement information of the target service platform, the method further comprises:

> transcoding the to-be-transcoded video according to the target video bitrate to obtain a transcoded video; and
>
> playing the transcoded video on the target service platform via a client.

13. An apparatus for determining a video bitrate, comprising:

> a video-frame selection module, configured to select target video frames from video frames of a to-be-transcoded video in a time-shifted manner;
>
> an estimated-bitrate determination module, configured to determine an estimated video bitrate of the to-be-transcoded video according to bitrate feature information of the target video frames;
>
> a relationship determination module, configured to obtain a first relative relationship between the estimated video bitrate and an actual video bitrate of the to-be-transcoded video; and
>
> a target-bitrate determination module, configured to determine a target video bitrate of the to-be-transcoded video according to the first relative relationship and bitrate requirement information of a target service platform.

14. A computer device, comprising a memory and a processor, wherein:

the memory stores computer-readable instructions, and
the processor, when executing the computer-readable instructions, implements the method according to any one of claims 1 to 12.

15. A non-volatile storage medium storing one or more computer-readable instructions, wherein:
the computer-readable instructions, when executed by a processor, implement the method according to any one of claims 1 to 12.

Figure 1

Select, in a time-shifting manner, target video frames from video frames of a to-be-transcoded video

S201

↓

Determine an estimated video bitrate of the to-be-transcoded video according to bitrate feature information of the target video frames

S202

↓

Obtain a first relative relationship between the estimated video bitrate and an actual video bitrate of the to-be-transcoded video

S203

↓

Determine a target video bitrate of the to-be-transcoded video according to the first relative relationship and bitrate requirement information of a target service platform

S204

Figure 2

| — □ ✕ |
|---|
| Under transcoding |

⟹

| — □ ✕ |
|---|
| Transcoding completed, the video is upcoming |

Figure 3

Select, in a predetermined time-shifting manner, target video frames from video frames of a to-be-transcoded video — S401

Entropy-decode the target video frames, and determine dequantization factors, motion vector residuals, and intra-frame prediction proportions of the entropy-decoded target video frames — S402

Obtain a mean quantization factor of the selected target video frames according to the quantization factor of each target video frame and a quantity of the selected target video frames — S403

Raise a pre-determined constant to a power of the mean quantization factor to obtain a value of an intermediate bitrate, and multiply the intermediate bitrate by a first adjustment parameter to obtain an estimated video bitrate — S404

Obtain a pre-determined second adjustment parameter and a predetermined third adjustment parameter, where the second adjustment parameter is less than the third adjustment parameter; multiply the estimated video bitrate by the second adjustment parameter to obtain a first weighted estimated video bitrate, and multiply the estimated video bitrate by the third adjustment parameter to obtain a second weighted estimated video bitrate — S405

Obtain a reference video bitrate meeting bitrate requirement information of a target service platform — S406

Compare an actual video bitrate with the first weighted estimated video bitrate and the second weighted estimated video bitrate; determine a first relationship to reflect a difference between video bitrates being small, and go to step S408, in a case that the actual video bitrate is greater than the first weighted estimated video bitrate and less than the second weighted estimated video bitrate; determine the first relationship to reflect the difference between video bitrates being large, and go to step S409, in a case that the actual video bitrate is less than or equal to the first weighted estimated video bitrate, or greater than or equal to the second weighted estimated video bitrate — S407

S408
Determine that the reference video bitrate serves as a target video bitrate

Obtain a mean motion vector residual of the selected target video frames according to a motion vector residual of each target video frame and the quantity, obtain a mean intra-frame prediction proportion of the target video frames according to an intra-frame prediction proportion of each target video frame and the quantity, and obtain a candidate video bitrate according to the reference video bitrate, the mean motion vector residual, and the mean intra-frame prediction proportion — S409

Determine a maximum video bitrate according to information on a bandwidth of the target service platform, and determine a minimum video bitrate according to information on video quality of the target service platform — S410

Determine that the candidate video bitrate serves as the target video bitrate, in a case that the candidate video bitrate is greater than the minimum video bitrate and less than the maximum video bitrate — S411

Determine that the minimum video bitrate serves as the target video bitrate, in a case that the candidate video bitrate is less than or equal to the minimum video bitrate — S412

Determined that the maximum video bitrate serves as the target video bitrate, in a case that the candidate video bitrate is greater than or equal to the maximum video bitrate — S413

Transcode the to-be-transcoded video according to the target video bitrate to obtain a transcoded video, and play the transcoded video on the target service platform via a client — S414

Figure 4

To-be-transcoded video

$i=i+1$

$i^{th}$ frame

$skip_i=0$

Frame-level skipping decision in decoding

$skip_i{\neq}0$

Entropy decoding

$QP_i$ and $Bitrate_{in}$

$skip_{dec}=0$

Module for determining a degree of complexity of a video texture

Rapid extraction of a video feature

$skip_{dec}=1$ or all video frames have been decoded

$Mvd_i$ and $Intra_i$

Calculate a video feature parameter

Configure a video transcoding bitrate

Adaptive configuration of a transcoding bitrate

$Br_{final}$

Figure 5

602

601

603

Network

Network

Figure 6

700

701 702 703 704

| Video-frame selection module | Estimated-bitrate determination module | Relationship determination module | Target-bitrate determination module |

Figure 7

## INTERNATIONAL SEARCH REPORT

International application No.

**PCT/CN2020/117370**

### A. CLASSIFICATION OF SUBJECT MATTER

H04N 19/115(2014.01)i; H04N 19/124(2014.01)i; H04N 19/139(2014.01)i; H04N 19/146(2014.01)i; H04N 19/159(2014.01)i; H04N 19/172(2014.01)i; H04N 19/196(2014.01)i; H04N 19/91(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; VEN; CNKI; CNTXT; USTXT; EPTXT; WOTXT; Patentics: 视频, 转码, 码率, 量化参数, 量化因子, 实际, 真实, 场景, 预估, 估算, 比较, 差别, video, code rate, transcoded, complexity, QP, Quantization, frame, estimated , real

### C. DOCUMENTS CONSIDERED TO BE RELEVANT

| Category* | Citation of document, with indication, where appropriate, of the relevant passages | Relevant to claim No. |
|---|---|---|
| PX | CN 111193924 A (TENCENT TECHNOLOGY SHENZHEN CO., LTD.) 22 May 2020 (2020-05-22) description, paragraphs [0007]-[0178], and figures 1-6 | 1-15 |
| A | CN 107846590 A (ALIBABA GROUP HOLDING LIMITED) 27 March 2018 (2018-03-27) description, paragraphs [0081]-[0203], and figures 1-3 | 1-15 |
| A | CN 105187835 A (ALIBABA GROUP HOLDING LIMITED) 23 December 2015 (2015-12-23) description, paragraphs [0092]-[0215], and figures 1-6 | 1-15 |
| A | CN 109660825 A (TENCENT TECHNOLOGY SHENZHEN CO., LTD.) 19 April 2019 (2019-04-19) entire document | 1-15 |
| A | US 8767825 B1 (GOOGLE INC. et al.) 01 July 2014 (2014-07-01) entire document | 1-15 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 November 2020** | **30 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/117370**

| Patent document cited in search report | | | Publication date (day/month/year) | Patent family member(s) | | | Publication date (day/month/year) |
|---|---|---|---|---|---|---|---|
| CN | 111193924 | A | 22 May 2020 | None | | | |
| CN | 107846590 | A | 27 March 2018 | CN | 107846590 | B | 08 September 2020 |
| CN | 105187835 | A | 23 December 2015 | US | 2015350726 | A1 | 03 December 2015 |
| | | | | US | 10645449 | B2 | 05 May 2020 |
| | | | | CN | 105187835 | B | 15 February 2019 |
| | | | | TW | I648980 | B | 21 January 2019 |
| | | | | WO | 2015183910 | A1 | 03 December 2015 |
| | | | | TW | 201545537 | A | 01 December 2015 |
| | | | | HK | 1215770 | A1 | 08 November 2019 |
| | | | | HK | 1215770 | A0 | 09 September 2016 |
| CN | 109660825 | A | 19 April 2019 | JP | 2020519207 | A | 25 June 2020 |
| | | | | EP | 3697095 | A1 | 19 August 2020 |
| | | | | KR | 20200003115 | A | 08 January 2020 |
| | | | | US | 2019320193 | A1 | 17 October 2019 |
| | | | | WO | 2019071984 | A1 | 18 April 2019 |
| | | | | IN201927044762 | | A | 03 January 2020 |
| US | 8767825 | B1 | 01 July 2014 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911366575